# EUROPÄISCHE PATENTSCHRIFT

(11) **EP 3 523 791 B1**
(45) Veröffentlichungstag und Bekanntmachung des Hinweises auf die Patenterteilung: **11.12.2024**
(21) Anmeldenummer: 17793827.1
(22) Anmeldetag: 10.10.2017
(51) Int. Cl.: G08G 1/16

(54) **FAHRZEUGWARNVORRICHTUNG**
VEHICLE WARNING APPARATUS
DISPOSITIF D'ALERTE POUR VÉHICULE AUTOMOBILE

(30) Priorität: 10.10.2016 DE 102016219578
(43) Veröffentlichungstag der Anmeldung: 14.08.2019
(73) Patentinhaber: Continental Automotive Technologies GmbH, 30175 Hannover (DE)
(72) Erfinder: FEIFEL, Harald, 64295 Darmstadt (DE); JAEGER, Attila, 64293 Darmstadt (DE)
(74) Vertreter: Continental Corporation
(86) Internationale Anmeldenummer: PCT/DE2017/200108
(87) Internationale Veröffentlichungsnummer: WO 2018/068796

(56) Entgegenhaltungen:
- DE-A1- 10 257 798
- DE-A1- 102012 222 780
- DE-A1- 102013 013 621
- US-A1- 2006 116 821

## Beschreibung

### TECHNISCHER HINTERGRUND

Die vorliegende Erfindung betrifft eine Fahrzeugwarnvorrichtung für Fahrzeuge zur Warnung vor Verkehrsanstauungen in und um einen Gefahrenbereich.

### STAND DER TECHNIK

Im Bereich von Gefahrenbereichen oder Gefahrenzonen, wie es sie zum Beispiel an Bahnübergängen gibt, besteht oft die Gefahr einer Kollision zwischen einem Fahrzeug, welches einen Bahnübergang überqueren möchte und einem herannahenden Zug, wenn das Fahrzeug den herannahenden Zug nicht rechtzeitig bemerkt. Um derartige Situationen in und um diese Gefahrenbereiche herum, insbesondere an Bahnübergängen, zu vermeiden, sind moderne Fahrzeuge mit entsprechenden Vorrichtungen ausgestattet, die in der Lage sind, ein Fahrzeug vor einem herannahenden Zug im Bereich eines Bahnübergangs zu warnen. Die WO 2016/046268 A1 offenbart ein Beispiel für eine derartige Zugwarnvorrichtung für Fahrzeuge.

Die DE 102 57 798 A1 betrifft eine Sicherheitsvorrichtung für insbesondere nichtspurgebundene Fahrzeuge, mit einer Überwachungseinrichtung, die einen Gefahrenraum überwacht, um Hindernisse im Gefahrenraum zu erkennen und bei einem erkannten Hindernis im Gefahrenraum ein Ausgangssignal hervorruft.

Die US 2006 / 116821 A1 betrifft ein Sensornetzwerk in einem Kreuzungsbereich zur Erfassung von Position und Geschwindigkeiten von Fahrzeugen im Bereich, wobei die gesammelten Informationen den sich der Kreuzung nähernden Fahrzeugen zur Prädiktion von Kollisionen unter auf der Kreuzung Berücksichtigung der Ampelphasen bereitgestellt werden.
vermeiden, da das Fahrzeug nicht gewarnt oder die Warnung für das Fahrzeug zu spät ausgegeben würde.

Die DE 10 2012 222 780 A1 betrifft eine Verkehrsteuerung zur Vermeidung einer Blockade in einem Verkehrsknoten, wobei wartende Fahrzeuge angewiesen werden, hinter einer Haltelinie zu verbleiben, bis die Zielfahrspur Kapazitäten aufweist.

### BESCHREIBUNG DER ERFINDUNG

Jedoch können gefährliche Verkehrssituationen für Fahrzeuge, insbesondere im Bereich von Bahnübergängen auch dann entstehen, wenn ein Fahrzeug innerhalb des Bereichs des Bahnübergangs wegen eines Verkehrsstaus halten muss, was durchaus eintreten kann und zwar noch bevor sich ein Zug dem Bahnübergang annähert. In diesem Fall ist eine derartige Zugwarnvorrichtung für ein Fahrzeug nicht ausreichend, um eine derartige Situation zu vermeiden, da das Fahrzeug nicht gewarnt oder die Warnung für das Fahrzeug zu spät ausgegeben würde.

### BESCHREIBUNG DER ERFINDUNG

Es ist daher Aufgabe der vorliegenden Erfindung, eine Fahrzeugwarnvorrichtung und ein Verfahren zum Warnen eines Fahrzeugs vor Verkehrsstauungen in und um Gefahrenbereiche herum, insbesondere im Bereich von Bahnübergängen, zur Verfügung zu stellen, um zu vermeiden, dass ein Fahrzeug innerhalb eines Gefahrenbereiches eines Bahnübergangs halten muss.

Erfindungsgemäß wird diese Aufgabe durch die Merkmale der unabhängigen Patentansprüche gelöst. Vorteilhafte Ausführungsformen der vorliegenden Erfindung sind Gegenstand der abhängigen Ansprüche, der Beschreibung sowie der Figuren.

Gemäß einem ersten Aspekt betrifft die Erfindung eine Fahrzeugwarnvorrichtung zum Warnen eines ersten Fahrzeugs (120) vor Verkehrsstauung in und um einen Gefahrenbereich, umfassend eine erste Kommunikationsschnittstelle, welche ausgebildet ist, erste Daten zu empfangen, wobei die ersten Daten einen Bewegungszustand des ersten Fahrzeugs betreffen; eine zweite Kommunikationsschnittstelle, welche ausgebildet ist, zweite Daten von dem zweiten Fahrzeug zu empfangen, wobei die zweiten Daten einen Bewegungszustand des zweiten Fahrzeugs betreffen; eine Verarbeitungsvorrichtung, welche ausgebildet ist, auf der Basis der ersten Daten und der zweiten Daten eine zukünftige Position des zweiten Fahrzeugs zu einem vorausberechneten Zeitpunkt zu bestimmen, zu dem das erste Fahrzeug sich innerhalb des Gefahrenbereichs befindet, und wobei die Verarbeitungsvorrichtung ferner ausgebildet ist, vor dem Eintreten des ersten Fahrzeugs in den Gefahrenbereich ein Fahrzeugwarnsignal an das erste Fahrzeug auszusenden, wenn die bestimmte zukünftige Position des zweiten Fahrzeugs sich unmittelbar hinter dem Gefahrenbereich befindet und das erste Fahrzeug veranlassen würde, innerhalb dieses Gefahrenbereichs anzuhalten.

Das Fahrzeug kann ein Kraftfahrzeug, insbesondere ein Personenkraftfahrzeug, ein Lastkraftfahrzeug, ein Motorrad, eine Elektrokraftfahrzeug oder ein Hybridkraftfahrzeug sein.

Bei der erfindungsgemäßen Fahrzeugwarnvorrichtung wird der Vorteil erreicht, dass das Fahrzeug vor der Gefahr eines Verkehrsstaus in einem gefährlichen Bereich, das bedeutet, in oder um oder unmittelbar nach einem Gefahrenbereich, welcher ein Bahnübergang sein kann, gewarnt wird. Dadurch wird verhindert, dass das Fahrzeug in diesen Gefahrenbereich einfährt und anhält. Das Fahrzeug wird also über die Gefahr eines Verkehrsstaus unmittelbar nach dem Gefahrenbereich informiert und zwar noch bevor das Fahrzeug in die betreffende Gefahrenzone einfährt. Auf diese Weise wird eine Kollision zwischen dem Fahrzeug und einem sich möglicherweise herannahenden Zug innerhalb des Gefahrenbereiches vermieden, wenn der betreffende Gefahrenbereich als ein Bahnübergang ausgebildet ist.

Gemäß einer Ausführungsform der vorliegenden Erfindung ist die zweite Kommunikationsschnittstelle als eine Car2X-Kommunikationsschnittstelle ausgebildet. Dadurch wird der Vorteil erreicht, dass die zweiten Daten von dem zweiten Fahrzeug über die an sich bekannte Car2X-Technologie empfangen werden können.

Gemäß einer Ausführungsform der vorliegenden Erfindung ist die Verarbeitungsvorrichtung ausgebildet, das Fahrzeugwarnsignal über eine drahtlose Car2X-Kommunikationsschnittstelle zu senden. Dadurch wird der Vorteil erreicht, dass das Fahrzeugwarnsignal über die an sich bekannte Car2X-Technologie gesendet werden kann, so dass das Fahrzeugwarnsignal von dem ersten Fahrzeug verarbeitet werden kann.

Gemäß einer Ausführungsform der vorliegenden Erfindung zeigt das Fahrzeugwarnsignal eine Verkehrsanstauung unmittelbar hinter dem Gefahrenbereich an, und wobei die Verarbeitungsvorrichtung ausgebildet ist, eine Information über den Gefahrenbereich zusammen mit dem Fahrzeugwarnsignal zu senden. Dadurch wird der Vorteil erreicht, dass der Fahrer des ersten Fahrzeuges in der Lage ist, rechtzeitig im Voraus seine Fahrroute zu planen oder sein Fahrverhalten rechtzeitig so anzupassen, dass ein Einfahren in die Gefahrenzone vermieden wird, wenn der Fahrer über die Ausprägung der Gefahrenzone im Voraus informiert wird.

Gemäß einer Ausführungsform der vorliegenden Erfindung umfasst die Fahrzeugwarnvorrichtung einen Schnittstellencontroller, welcher ausgebildet ist, die erste Kommunikationsschnittstelle und die zweite Kommunikationsschnittstelle zu überwachen, und wobei der Schnittstellencontroller ferner ausgebildet ist, vorzugsweise auf Basis der ersten Daten und der zweiten Daten, die Verarbeitungsvorrichtung zur Ausgabe eines Fahrzeugwarnsignals an das erste Fahrzeug anzusteuern. Dadurch wird der Vorteil erreicht, dass die erste Kommunikationsschnittstelle, die zweite Kommunikationsschnittstelle und die Verarbeitungsvorrichtung zentral ansteuerbar sind.

Gemäß einer Ausführungsform der vorliegenden Erfindung ist die erste Kommunikationsschnittstelle als eine verdrahtete oder drahtlose Kommunikationsschnittstelle ausgebildet. Dadurch wird der Vorteil erreicht, dass die erste Kommunikationsschnittstelle des ersten Fahrzeuges mit einem verdrahteten Datennetzwerk des ersten Fahrzeuges verbindbar ist, um Fahrzeugdaten, die den Bewegungszustand des ersten Fahrzeuges betreffen, oder dass die erste Kommunikationsschnittstelle des ersten Fahrzeuges mit einem drahtlosen Datennetzwerk des ersten Fahrzeuges verbindbar ist, um erste Daten zu empfangen, die den Bewegungszustand des ersten Fahrzeuges betreffen.

Gemäß einer Ausführungsform der vorliegenden Erfindung umfasst die Fahrzeugwarnvorrichtung eine Anzeigevorrichtung zu einer optischen und / oder akustischen Anzeige des Fahrzeugwarnsignals. Dadurch wird der Vorteil erreicht, das durch die Anzeigevorrichtung, welche zum Beispiel als ein Bildschirm und/oder als eine akustische Signalquelle in Form eines Lautsprechers ausgebildet sein kann, das Fahrzeugwarnsignal angezeigt werden kann, ohne zusätzliche oder weitere Anzeigevorrichtungen innerhalb des ersten Fahrzeuges installieren zu müssen. Ein weiterer Vorteil besteht darin, dass der Fahrer des ersten Fahrzeuges auf verschiedene Art und Weise und in Abhängigkeit einer im Voraus bestimmten, das heißt, berechneten Verkehrssituation, in welche das erste Fahrzeug geraten könnte und bevor das erste Fahrzeug in eine Gefahrenzone einfährt, gewarnt werden kann.

Gemäß einer Ausführungsform der vorliegenden Erfindung ist die Fahrzeugwarnvorrichtung innerhalb des ersten Fahrzeugs installierbar. Dadurch wird der Vorteil erreicht, dass eine installierte Fahrzeugwarnvorrichtung im ersten Fahrzeug unmittelbar mit einem Datennetzwerk des ersten Fahrzeuges verbindbar ist.

Gemäß einer Ausführungsform der vorliegenden Erfindung ist der Gefahrenbereich als ein Bahnübergang ausgebildet. Der Bahnübergang kann dabei als ein beschrankter oder als ein unbeschrankter Bahnübergang ausgebildet sein.

Gemäß einem zweiten Aspekt betrifft die Erfindung ein Verfahren zum Warnen eines ersten Fahrzeugs (120) vor Verkehrsstauung in und um einen Gefahrenbereich, umfassend die Schritte: Empfangen von ersten Daten mittels einer ersten Kommunikationsschnittstelle, wobei die ersten Daten einen Bewegungszustand des ersten Fahrzeugs betreffen; Empfangen von zweiten Daten mittels einer zweiten Kommunikationsschnittstelle, wobei die zweiten Daten einen Bewegungszustand des zweiten Fahrzeugs betreffen; Bestimmung, mittels einer Verarbeitungsvorrichtung, einer zukünftigen Position des zweiten Fahrzeugs zu einem vorausberechneten Zeitpunkt, zu dem sich das erste Fahrzeug innerhalb des Gefahrenbereichs befindet, auf Basis der ersten Daten und der zweiten Daten; Aussenden, mittels der Verarbeitungsvorrichtung, eines Fahrzeugwarnsignals an ein erstes Fahrzeug vor dem

Eintreten des ersten Fahrzeugs in den Gefahrenbereich, wenn die bestimmte zukünftige Position des zweiten Fahrzeugs sich unmittelbar hinter dem Gefahrenbereich befindet und das erste Fahrzeug veranlassen würde, innerhalb dieses Gefahrenbereichs anzuhalten.

Gemäß einem dritten Aspekt betrifft die Erfindung ein Fahrzeug mit einer Fahrzeugwarnvorrichtung.

### BESCHREIBUNG DER FIGUREN

Weitere Ausführungsbeispiele werden unter Bezugnahme auf die beiliegenden Figuren näher erläutert. Es zeigen:
- Fig. 1: eine schematische Abbildung einer Fahrzeugwarnvorrichtung gemäß einer Ausführungsform der vorliegenden Erfindung;
- Fig. 2: ein Diagramm eines Verfahrens zum Aussenden eines Fahrzeugwarnsignals an ein erstes Fahrzeug.

### DETAILIERTE BESCHREIBUNG der FIGUREN

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

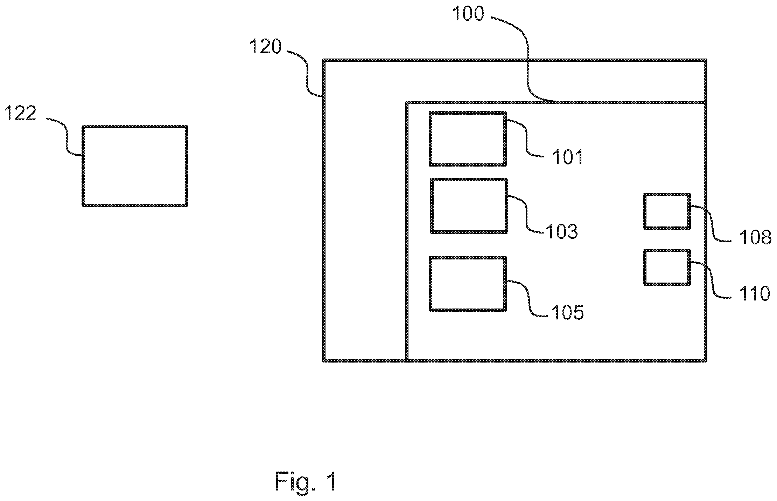

Fig. 1 zeigt eine Fahrzeugwarnvorrichtung 100 zum Aussenden eines Fahrzeugwarnsignals an ein erstes Fahrzeug 120, wobei das Fahrzeugwarnsignal vor dem Eintreten des ersten Fahrzeugs 120 in einen Gefahrenbereich anzeigt, ob sich ein vor dem ersten Fahrzeug 120 befindliches zweites Fahrzeug 122 unmittelbar hinter diesem Gefahrenbereich befindet, umfassend eine erste Kommunikationsschnittstelle 101, welche ausgebildet ist, erste Daten zu empfangen, wobei die ersten Daten einen Bewegungszustand des ersten Fahrzeugs 120 betreffen; eine zweite Kommunikationsschnittstelle 103, welche ausgebildet ist, zweite Daten von dem zweiten Fahrzeug 122 zu empfangen, wobei die zweiten Daten einen Bewegungszustand des zweiten Fahrzeugs 122 betreffen; eine Verarbeitungsvorrichtung 105, welche ausgebildet ist, auf der Basis der ersten Daten und der zweiten Daten eine zukünftige Position des zweiten Fahrzeugs 122 zu einem vorausberechneten Zeitpunkt zu bestimmen, zu dem das erste Fahrzeug 120 sich innerhalb des Gefahrenbereichs befindet, und wobei die Verarbeitungsvorrichtung 105 ferner ausgebildet ist, vor dem Eintreten des ersten Fahrzeugs 120 in den Gefahrenbereich das Fahrzeugwarnsignal an das erste Fahrzeug 120 auszusenden, wenn die bestimmte zukünftige Position des zweiten Fahrzeugs 122 das erste Fahrzeug 120 veranlassen würde, innerhalb dieses Gefahrenbereichs anzuhalten.

In diesem Zusammenhang sollte erwähnt werden, dass die Information über den Bewegungszustand des ersten Fahrzeuges 120 und des zweiten Fahrzeuges 122 jeweils Informationen über eine aktuelle Geschwindigkeit, eine aktuelle Position oder fahrzeugspezifische Daten, wie zum Beispiel die Dimensionen oder eine Fahrzeugmodellangabe, des jeweiligen Fahrzeuges beinhalten kann.

Die Verarbeitungsvorrichtung 105 kann das Fahrzeugwarnsignal über ein drahtloses Car2X-Kommunikationsnetzwerk senden. Auf diese Weise kann die an sich bekannte Car2X-Technologie verwendet werden. Darüber hinaus kann die Verarbeitungsvorrichtung 105 auch ausgebildet sein, das Fahrzeugwarnsignal über die Car2X-Technologie an weitere Fahrzeuge zu senden.

Die erste Kommunikationsschnittstelle 101 kann eine verdrahtete oder eine drahtlose Kommunikationsschnittstelle sein. Auf diese Weise kann die erste Kommunikationsschnittstelle 101 mit einem verdrahteten Datennetzwerk des ersten Fahrzeuges 120 verbunden werden, um Fahrzeugdaten, die den Bewegungszustand des ersten Fahrzeuges 120 betreffen, zu steuern. Außerdem kann die erste Kommunikationsschnittstelle 101 als eine drahtlose Kommunikationsschnittstelle ausgebildet sein, die mit einem drahtlosen Datennetzwerk des ersten Fahrzeuges 120 verbindbar ist, um erste Daten zu erhalten, die den Bewegungszustand des ersten Fahrzeuges 120 betreffen.

Die zweite Kommunikationsschnittstelle 103 kann eine Car2X-Kommunikationsschnittstelle sein. In einer Ausführungsform der vorliegenden Erfindung, kann auch die erste Kommunikationsschnittstelle 101 eine Car2X- Kommunikationsschnittstelle sein. Dieses kann insbesondere dann von Nutzen sein, wenn die erste Kommunikationsschnittstelle 101 zum Beispiel mit anderen technischen Komponenten der Fahrzeugwarnvorrichtung 100 und / oder mit anderen - externen - Geräten, die mit dem ersten Fahrzeug 120 zum gegenseitigen Datenaustausch verbindbar sind, kommuniziert.

In diesem Zusammenhang ist zu erwähnen, dass das zweite Fahrzeug 122, das die zweiten Daten sendet, eine Kommunikationsschnittstelle umfasst, die nicht in Fig. 1 dargestellt ist. Diese Kommunikationsschnittstelle des zweiten Fahrzeuges 122 kann vorzugsweise eine Car2X- Kommunikationsschnittstelle sein, damit das zweite Fahrzeug 122 mit dem ersten Fahrzeug 120 optimal kommunizieren kann.

Das Fahrzeugwarnsignal signalisiert dem Fahrer des ersten Fahrzeugs 120 einen Verkehrsstau, der sich bereits im oder unmittelbar hinter oder nach dem Gefahrenbereich oder der Gefahrenzone durch wartende Fahrzeuge gebildet hat, und wobei die Verarbeitungsvorrichtung 105 ausgebildet ist, Informationen bezüglich der Gefahrenzone zusammen mit dem Fahrzeugwarnsignal auszusenden. Auf diese Weise wird der Fahrer des ersten Fahrzeuges 120 nicht nur vor einem Verkehrsstau gewarnt, welcher sich vorzugsweise um bzw. unmittelbar nach oder hinter dem betreffenden Gefahrenbereich befinden kann. Der Fahrer des ersten Fahrzeuges 120 wird also auch über den Gefahrenbereich an sich informiert, zum Beispiel über die genaue Entfernung seines Fahrzeugs 120 zu dem betreffenden Gefahrenbereich. Dies kann eine nützliche Information für den Fahrer des ersten Fahrzeuges 120 darstellen, da diese Information es dem Fahrer ermöglicht, rechtzeitig auf eine spezielle Verkehrssituation in, um oder nach dem Gefahrenbereich, zum Beispiel durch ein rechtzeitiges Umfahren des Gefahrenbereiches, zu reagieren.

Die Information über einen bevorstehenden Gefahrenbereich auf dem FahrtwegWeg des ersten Fahrzeugs 120 kann auf verschiedene Weise eingeholt werden:
Eine erste Möglichkeit besteht darin, dass die Verarbeitungsvorrichtung 105 sich mit einer lokalen Datenbank verbindet, die in den ersten Fahrzeug 120 installiert ist. Die lokale Datenbank kann dabei die erforderliche Information über den betreffenden Gefahrenbereich beinhalten.

Eine zweite Möglichkeit besteht darin, dass die Verarbeitungsvorrichtung 105 sich mit einer externen installierten Datenbank außerhalb des ersten Fahrzeuges 105 verbindet, um die erforderlichen Informationen über den jeweiligen Gefahrenbereich rechtzeitig abrufen zu können. Für diesen Anwendungsfall kann die Fahrzeugwarnvorrichtung 100 eine dritte Kommunikationsschnittstelle umfassen, die nicht in der Fig. 1 gezeigt ist. Die Verarbeitungsvorrichtung 105 kann sich dann über die dritte Kommunikationsschnittstelle mit dieser externen Datenbank verbinden, um detaillierte und aktualisierte Informationen über den betreffenden Gefahrenbereich oder die betreffende und zu erwartende Gefahrenzone abzurufen. Die dritte Kommunikationsschnittstelle kann dabei ebenso als eine Car2X-Kommunikationsschnittstelle ausgebildet sein, was insbesondere dann von Vorteil sein kann, da die Information über den Gefahrenbereich auch von anderen Fahrzeugen empfangen werden kann, die ebenfalls die bekannte Car2X-Technologie verwenden und die sich unter Umständen bereits näher an den betreffenden und bevorstehenden Gefahrenbereich befinden. Alternativ kann das erste Fahrzeug 120 die betreffende Information über den bevorstehenden Gefahrenbereich auch an andere Fahrzeuge übermitteln, wenn auch diese mit Car2X-Technologie ausgerüstet sind und die sich möglicherweise hinter dem ersten Fahrzeug 120 befinden.

Der Gefahrenbereich kann insbesondere ein beschrankter oder ein unbeschrankter Bahnübergang sein. Die vorliegende Erfindung ist jedoch nicht auf derartige Gefahrenbereiche beschränkt. Zum Beispiel können auch Gefahrebereiche wie etwa eine Hängebrücke oder ganz allgemein, eine Brücke, welche von den ersten Fahrzeug 120 überquert werden soll und die sich zum Beispiel innerhalb einer vorausberechneten und geplanten Fahrtroute des ersten Fahrzeuges befindet, für die vorliegende Erfindung in Betracht kommen, insbesondere dann, wenn ein Verkehrsstau hinter der Brücke das erste Fahrzeug 120 zu einem Halten auf der Brücke veranlassen würde, um darauf zu warten, mit der Überquerung der Brücke fortzufahren, bis sich der Verkehrsstau aufgelöst hat.

Die Fahrzeugwarnvorrichtung 100, wie in Fig. 1 dargestellt, umfasst einen Schnittstellencontroller 108, der die erste Kommunikationsschnittstelle 101 und zweite Kommunikationsschnittstelle 103 überwacht und gegebenenfalls auch ansteuern kann, und der, vorzugsweise auf Basis der ersten Daten unter zweiten Daten, die Verarbeitungsvorrichtung 105 derart ansteuert, damit diese ein Fahrzeugwarnsignal an das erste Fahrzeug 120 aussendet. Der Schnittstellencontroller 108 erlaubt also die zentrale Steuerung der ersten Kommunikationsschnittstelle 101, der zweiten Kommunikationsschnittstelle 103 und der Verarbeitungsvorrichtung 105 auf effiziente Weise.

Die Fahrzeugwarnvorrichtung 100 gemäß Fig. 1 umfasst weiterhin eine Anzeigevorrichtung 110 für eine optische und/oder eine akustische Anzeige des Fahrzeugwarnsignals. Die Anzeigevorrichtung 110 kann dabei einen Bildschirm zur Anzeige des Fahrzeugwarnsignals auf optische Weise umfassen. Die Anzeigevorrichtung 110 kann aber auch ausgebildet sein das entsprechende Fahrzeugwarnsignal auf akustische Weise, zum Beispiel über einen Lautsprecher, anzuzeigen bzw. auszugeben, wobei der Lautsprecher ein Teil der Anzeigevorrichtung 110 sein kann.

In einer Ausführungsform der vorliegenden Erfindung kann die Anzeigevorrichtung 110 jedoch auch nur eine Medienkommunikationsschnittstelle bereitstellen, um bereits in dem ersten Fahrzeug 120 installierte Anzeigevorrichtungen nutzen zu können. In diesem Anwendungsfall besteht die Hauptaufgabe der Anzeigevorrichtung 110 dann darin, das durch die Verarbeitungsvorrichtung 105 bereitgestellte Fahrzeugwarnsignal in ein entsprechendes Datenformat zu übersetzen, das dann von den bereits vorhandenen und installierten Anzeigevorrichtungen, wie zum Beispiel ein Head-up-Display, innerhalb des ersten Fahrzeuges 120 gelesen werden kann. Derartige Anzeigenvorrichtungen können beispielsweise als Navigationsgeräte mit Bildschirm und/oder Lautsprecher innerhalb des ersten Fahrzeuges 120 installiert sein, um das auszugebende Fahrzeugwarnsignal auf optische und/oder akustische Weise anzuzeigen. Eine derartige Ausführungsform der Anzeigevorrichtung 110 hat den Vorteil, dass die Dimensionen der Fahrzeugwarnvorrichtung 100 minimal gehalten werden können und bereits im ersten Fahrzeug 120 existierende und installierte Anzeigegeräte zur Anzeige bzw. Ausgabe des Fahrzeugwarnsignals nutzbar sind.

In diesem Zusammenhang sollte erwähnt werden, dass die Art der Ausgabe des Fahrzeugwarnsignals über die entsprechende Anzeigevorrichtung 110 auch von der jeweiligen Verkehrssituation in und um den betreffenden Gefahrenbereich abhängig gemacht werden kann. Dies bedeutet, dass die Verarbeitungsvorrichtung 105 für jede möglicherweise auftretende und vorausberechnete Verkehrssituation individuell darüber entscheiden kann, vorzugsweise auf der Basis der ersten Daten unter zweiten Daten, welche Art von Fahrzeugwarnsignal an den Fahrer des ersten Fahrzeuges 120 ausgegeben wird bzw. auf welche Weise das Fahrzeugwarnsignal dem Fahrer des ersten Fahrzeuges 120 übermittelt wird. Die Verarbeitungsvorrichtung 105 kann dazu entsprechend die Steuerung der Anzeigevorrichtung 110 übernehmen, um sicherzustellen, dass das passende und an die jeweilige Verkehrssituation angepasste Fahrzeugwarnsignal ausgegeben wird - entweder über die Anzeigevorrichtung 110 und / oder über entsprechende andere zusätzliche Anzeigevorrichtungen innerhalb des ersten Fahrzeugs 120, die dann entsprechend von der Verarbeitungsvorrichtung 105 angesteuert werden.

Die Fahrzeugwarnvorrichtung 100 kann innerhalb des ersten Fahrzeuges 120 und vorzugsweise auf einer Plug & Play-Basis installierbar sein, wenn das erste Fahrzeug 120 über die erforderlichen physikalischen Konnektoren verfügt, die nicht in Fig. 1 dargestellt sind. Dadurch lässt sich die Fahrzeugwarnvorrichtung 100 zum Beispiel für Wartung oder Software-Aktualisierungen sehr leicht aus dem ersten Fahrzeug 120 herausnehmen und wieder einsetzen.

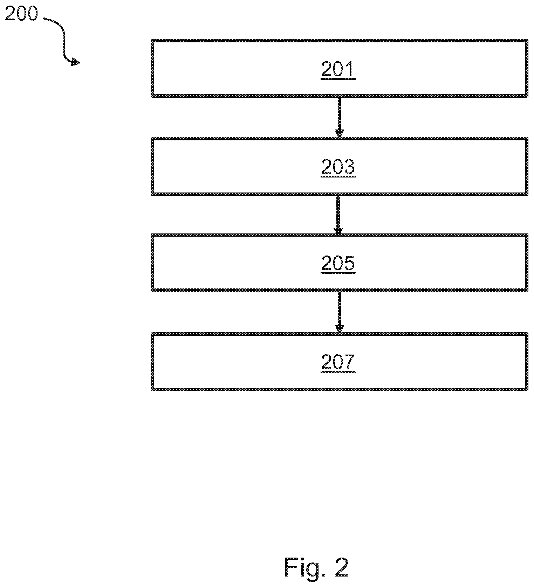

Fig. 2 zeigt ein Diagramm eines Verfahrens zum Aussenden eines Fahrzeugwarnsignals an ein erstes Fahrzeug 120, wobei das Fahrzeugwarnsignal vor dem Eintreten des ersten Fahrzeugs 120 in einen Gefahrenbereich anzeigt, ob sich ein vor dem ersten Fahrzeug 120 befindliches zweites Fahrzeug 122 unmittelbar hinter diesem Gefahrenbereich befindet. Das Verfahren 200 umfasst einen ersten Schritt 201 des Empfangens von ersten Daten, wobei die ersten Daten einen Bewegungszustand des ersten Fahrzeugs 120 betreffen. Das Verfahren 200 umfasst einen zweiten Schritt 203 des Empfangens von zweiten Daten, wobei die zweiten Daten einen Bewegungszustand des zweiten Fahrzeugs 122 betreffen. Das Verfahren 200 umfasst einen dritten Schritt 205 des Bestimmens einer zukünftigen Position des zweiten Fahrzeugs 122 zu einem vorausberechneten Zeitpunkt, zu dem sich das erste Fahrzeug 120 innerhalb des Gefahrenbereichs befindet, auf Basis der ersten Daten und der zweiten Daten. Das Verfahren 200 umfasst einen vierten Schritt 207 des Aussendens des Fahrzeugwarnsignals an ein erstes Fahrzeug 120 vor dem Eintreten des ersten Fahrzeugs 120 in den Gefahrenbereich, wenn die bestimmte zukünftige Position des zweiten Fahrzeugs 122 das erste Fahrzeug 120 veranlassen würde, innerhalb dieses Gefahrenbereichs anzuhalten.

### BEZUGSZEICHENLISTE

- 100: Fahrzeugwarnvorrichtung
- 101: Erste Kommunikationsschnittstelle
- 103: Zweite Kommunikationsschnittstelle
- 105: Verarbeitungsvorrichtung
- 108: Schnittstellencontroller
- 110: Anzeigevorrichtung
- 120: Erstes Fahrzeug
- 122: Zweites Fahrzeug

- 200: Verfahren
- 201: Empfangen von ersten Daten
- 203: Empfangen von zweiten Daten
- 205: Bestimmen einer zukünftigen Position
- 207: Aussenden eines Fahrzeugwarnsignals

## Patentansprüche

1. Fahrzeugwarnvorrichtung (100) zum Warnen eines ersten Fahrzeugs (120) vor Verkehrsstauung in und um einen Gefahrenbereich, umfassend:
eine erste Kommunikationsschnittstelle (101), welche ausgebildet ist, erste Daten zu empfangen, wobei die ersten Daten einen Bewegungszustand des ersten Fahrzeugs (120) betreffen;
eine zweite Kommunikationsschnittstelle (103), welche ausgebildet ist, zweite Daten von dem zweiten Fahrzeug (122) zu empfangen, wobei die zweiten Daten einen
Bewegungszustand des zweiten Fahrzeugs (122) betreffen,
**dadurch gekennzeichnet, dass**
eine Verarbeitungsvorrichtung (105), welche ausgebildet ist, auf der Basis der ersten Daten und der zweiten Daten eine zukünftige Position des zweiten Fahrzeugs (122) zu einem vorausberechneten Zeitpunkt zu bestimmen, zu dem das erste Fahrzeug (120) sich innerhalb des Gefahrenbereichs befindet, und
die Verarbeitungsvorrichtung (105) ferner ausgebildet ist, vor dem Eintreten des ersten Fahrzeugs (120) in den Gefahrenbereich ein Fahrzeugwarnsignal an das erste Fahrzeug (120) auszusenden, wenn die bestimmte zukünftige Position des zweiten Fahrzeugs (122) sich unmittelbar hinter dem Gefahrenbereich befindet und das erste Fahrzeug (120) veranlassen würde, innerhalb dieses Gefahrenbereichs anzuhalten.

2. Fahrzeugwarnvorrichtung (100) nach Anspruch 1, wobei die zweite Kommunikationsschnittstelle (103) als eine Car2X-Kommunikationsschnittstelle ausgebildet ist.

3. Fahrzeugwarnvorrichtung (100) nach Anspruch 1 oder 2, wobei die Verarbeitungsvorrichtung (105) ausgebildet ist, das Fahrzeugwarnsignal über eine drahtlose Car2X-Kommunikationsschnittstelle zu senden.

4. Fahrzeugwarnvorrichtung (100) nach einem der vorstehenden Ansprüche, wobei das Fahrzeugwarnsignal eine Verkehrsanstauung unmittelbar hinter dem Gefahrenbereich anzeigt, und wobei die Verarbeitungsvorrichtung (105) ausgebildet ist, eine Information über den Gefahrenbereich zusammen mit dem Fahrzeugwarnsignal zu senden.

5. Fahrzeugwarnvorrichtung (100) nach einem der vorstehenden Ansprüche, wobei die Fahrzeugwarnvorrichtung (100) einen Schnittstellencontroller (108) umfasst, welcher ausgebildet ist, die erste Kommunikationsschnittstelle (101) und die zweite Kommunikationsschnittstelle (103) zu überwachen, und wobei der Schnittstellencontroller (108) ferner ausgebildet ist, vorzugsweise auf Basis der ersten Daten und der zweiten Daten, die Verarbeitungsvorrichtung (105) zur Ausgabe eines Fahrzeugwarnsignals an das erste Fahrzeug (120) anzusteuern.

6. Fahrzeugwarnvorrichtung (100) nach einem der vorstehenden Ansprüche, wobei die erste Kommunikationsschnittstelle (101) als eine verdrahtete oder drahtlose Kommunikationsschnittstelle ausgebildet ist.

7. Fahrzeugwarnvorrichtung (100) nach einem der vorstehenden Ansprüche, wobei die Fahrzeugwarnvorrichtung (100) eine Anzeigevorrichtung (110) zu einer optischen und / oder akustischen Anzeige des Fahrzeugwarnsignals umfasst.

8. Fahrzeugwarnvorrichtung (100) nach einem der vorstehenden Ansprüche, wobei die Fahrzeugwarnvorrichtung (100) innerhalb des ersten Fahrzeugs (120) installierbar ist.

9. Fahrzeugwarnvorrichtung (100) nach einem der vorstehenden Ansprüche, wobei der Gefahrenbereich als ein Bahnübergang ausgebildet ist.

10. Verfahren (200) zum Warnen eines ersten Fahrzeugs (120) vor Verkehrsstauung in und um einen Gefahrenbereich, umfassend die Schritte:
Empfangen (201) von ersten Daten mittels einer ersten Kommunikationsschnittstelle (101), wobei die ersten Daten einen Bewegungszustand des ersten Fahrzeugs (120) betreffen;
Empfangen (203) von zweiten Daten mittels einer zweiten Kommunikationsschnittstelle (103), wobei die zweiten Daten einen
Bewegungszustand des zweiten Fahrzeugs (122) betreffen, **gekennzeichnet durch**
Bestimmung (205), mittels einer Verarbeitungsvorrichtung (105), einer zukünftigen Position des zweiten Fahrzeugs (122) zu einem vorausberechneten Zeitpunkt, zu dem sich das erste Fahrzeug (120) innerhalb des Gefahrenbereichs befindet, auf Basis der ersten Daten und der zweiten Daten;
Aussenden (207) , mittels der Verarbeitungsvorrichtung (105), eines Fahrzeugwarnsignals an ein erstes Fahrzeug (120) vor dem
Eintreten des ersten Fahrzeugs (120) in den Gefahrenbereich, wenn die bestimmte zukünftige Position des zweiten Fahrzeugs (122) sich unmittelbar hinter dem Gefahrenbereich befindet und das erste Fahrzeug (120) veranlassen würde, innerhalb dieses Gefahrenbereichs anzuhalten.

11. Fahrzeug mit einer Fahrzeugwarnvorrichtung (100) nach einem der Ansprüche 1 bis 9.

## Claims

1. Vehicle warning apparatus (100) for warning a first vehicle (120) about traffic congestion in and around a hazard area, comprising:
a first communication interface (101) designed to receive first data, the first data relating to a state of motion of the first vehicle (120);
a second communication interface (103) designed to receive second data from the second vehicle (122), the second data relating to a state of motion of the second vehicle (122),
**characterized in that**
a processing apparatus (105) is designed to take the first data and the second data as a basis for determining a future position of the second vehicle (122) at a predicted time at which the first vehicle (120) is within the hazard area, and the processing apparatus (105) is further designed to transmit a vehicle warning signal to the first vehicle (120) before the first vehicle (120) enters the hazard area if the determined future position of the second vehicle (122) is directly behind the hazard area and would prompt the first vehicle (120) to stop within this hazard area.

2. Vehicle warning apparatus (100) according to Claim 1, wherein the second communication interface (103) is in the form of a Car2X communication interface.

3. Vehicle warning apparatus (100) according to Claim 1 or 2, wherein the processing apparatus (105) is designed to transmit the vehicle warning signal via a wireless Car2X communication interface.

4. Vehicle warning apparatus (100) according to one of the preceding claims, wherein the vehicle warning signal indicates a traffic jam directly behind the hazard area, and wherein the processing apparatus (105) is designed to transmit information about the hazard area together with the vehicle warning signal.

5. Vehicle warning apparatus (100) according to one of the preceding claims, wherein the vehicle warning apparatus (100) comprises an interface controller (108) designed to monitor the first communication interface (101) and the second communication interface (103), and wherein the interface controller (108) is further designed to preferably take the first data and the second data as a basis for actuating the processing apparatus (105) to output a vehicle warning signal to the first vehicle (120).

6. Vehicle warning apparatus (100) according to one of the preceding claims, wherein the first communication interface (101) is in the form of a wired or wireless communication interface.

7. Vehicle warning apparatus (100) according to one of the preceding claims, wherein the vehicle warning apparatus (100) comprises an indicating apparatus (110) for visually and/or audibly indicating the vehicle warning signal.

8. Vehicle warning apparatus (100) according to one of the preceding claims, wherein the vehicle one apparatus (100) can be installed inside the first vehicle (120).

9. Vehicle warning apparatus (100) according to one of the preceding claims, wherein the hazard area is in the form of a level crossing.

10. Method (200) for warning a first vehicle (120) about traffic congestion in and around a hazard area, comprising the steps of:
receiving (201) first data by means of a first communication interface (101), the first data relating to a state of motion of the first vehicle (120);
receiving (203) second data by means of a second communication interface (103), the second data relating to a state of motion of the second vehicle (122), **characterized by**
determining (205), by means of a processing apparatus (105), a future position of the second vehicle (122) at a predicted time at which the first vehicle (120) is within the hazard area, on the basis of the first data and the second data;
transmitting (207), by means of the processing apparatus (105), a vehicle warning signal to a first vehicle (120) before the first vehicle (120) enters the hazard area if the determined future position of the second vehicle (122) is directly behind the hazard area and would prompt the first vehicle (120) to stop within this hazard area.

11. Vehicle having a vehicle warning apparatus (100) according to one of Claims 1 to 9.

## Revendications

1. Dispositif d'alerte pour véhicule (100) permettant d'avertir un premier véhicule (120) d'un embouteillage dans et autour une zone dangereuse, comprenant :
une première interface de communication (101) qui est réalisée pour recevoir des premières données, les premières données concernant un état de mouvement du premier véhicule (120) ;
une deuxième interface de communication (103) qui est réalisée pour recevoir des deuxièmes données du deuxième véhicule (122), les deuxièmes données concernant un état de mouvement du deuxième véhicule (122),
**caractérisé par**
un dispositif de traitement (105) qui est réalisé pour déterminer sur la base des premières données et des deuxièmes données une position future du deuxième véhicule (122) à un instant préalablement calculé où le premier véhicule (120) se trouvera à l'intérieur de la zone dangereuse, et le dispositif de traitement (105) est en outre réalisé, avant l'entrée du premier véhicule (120) dans la zone dangereuse, pour émettre un signal d'alerte pour véhicule à destination du premier véhicule (120) si la position future déterminée du deuxième véhicule (122) se trouve directement après la zone dangereuse et amènerait le premier véhicule (120) à s'arrêter à l'intérieur de cette zone dangereuse.

2. Dispositif d'alerte pour véhicule (100) selon la revendication 1, dans lequel la deuxième interface de communication (103) est réalisée sous la forme d'une interface de communication Car2X.

3. Dispositif d'alerte pour véhicule (100) selon la revendication 1 ou 2, dans lequel le dispositif de traitement (105) est réalisé pour émettre le signal d'alerte pour véhicule par l'intermédiaire d'une interface de communication Car2X sans fil.

4. Dispositif d'alerte pour véhicule (100) selon l'une quelconque des revendications précédentes, dans lequel le signal d'alerte pour véhicule indique un embouteillage directement après la zone dangereuse, et dans lequel le dispositif de traitement (105) est réalisé pour envoyer une information concernant la zone dangereuse avec le signal d'alerte pour véhicule.

5. Dispositif d'alerte pour véhicule (100) selon l'une quelconque des revendications précédentes, dans lequel le dispositif d'alerte pour véhicule (100) comprend un contrôleur d'interface (108) qui est réalisé pour surveiller la première interface de communication (101) et la deuxième interface de communication (103), et dans lequel le contrôleur d'interface (108) est en outre réalisé pour piloter le dispositif de traitement (105) sur la base des premières données et des deuxièmes données pour émettre un signal d'alerte pour véhicule à destination du premier véhicule (120).

6. Dispositif d'alerte pour véhicule (100) selon l'une quelconque des revendications précédentes, dans lequel l'interface de communication (101) est réalisée en tant qu'interface de communication avec ou sans fil.

7. Dispositif d'alerte pour véhicule (100) selon l'une quelconque des revendications précédentes, dans lequel le dispositif d'alerte pour véhicule (100) comprend un dispositif d'affichage (110) pour un affichage optique et/ou acoustique du signal d'alerte pour véhicule.

8. Dispositif d'alerte pour véhicule (100) selon l'une quelconque des revendications précédentes, dans lequel le dispositif d'alerte pour véhicule (100) peut être installé à l'intérieur du premier véhicule (120).

9. Dispositif d'alerte pour véhicule (100) selon l'une quelconque des revendications précédentes, dans lequel la zone dangereuse est réalisée sous la forme d'un passage à niveau.

10. Procédé (200) permettant d'avertir un premier véhicule (120) d'un embouteillage dans et autour une zone dangereuse, comprenant les étapes consistant à :
recevoir (201) des premières données au moyen d'une première interface de communication (101), les premières données concernant un état de mouvement du premier véhicule (120) ;
recevoir (203) des deuxièmes données au moyen d'une deuxième interface de communication (103), les deuxièmes données concernant un état de mouvement du deuxième véhicule (122) ;
**caractérisé par**
la détermination (205), au moyen d'un dispositif de traitement (105), d'une position future du deuxième véhicule (122) à un instant calculé préalablement où le premier véhicule (120) se trouvera dans la zone dangereuse, sur la base des premières données et des deuxièmes données ;
l'émission (207), au moyen du dispositif de traitement (105) un signal d'alerte pour véhicule à un premier véhicule (120) avant l'entrée du premier véhicule (120) dans la zone dangereuse si la position future déterminée du deuxième véhicule (122) se trouve directement après la zone dangereuse et amènerait le premier véhicule (120) à s'arrêter à l'intérieur de cette zone dangereuse.

11. Véhicule, comprenant un dispositif d'alerte pour véhicule (100) selon l'une quelconque des revendications 1 à 9.
